# FASCICULE DE BREVET EUROPEEN

(11) **EP 4 127 618 B1**
(45) Date de publication et mention de la délivrance du brevet: **02.09.2026**
(21) Numéro de dépôt: 21720814.9
(22) Date de dépôt: 30.03.2021
(51) Int. Cl.: G01G 19/44

(54) **BALANCE ÉLECTRONIQUE ET PROCÉDÉ DE COMMANDE ASSOCIÉ**
ELEKTRONISCHE WAAGE UND ZUGEHÖRIGES STEUERUNGSVERFAHREN
ELECTRONIC SCALE AND ASSOCIATED CONTROL METHOD

(30) Priorité: 01.04.2020 FR 2003272
(43) Date de publication de la demande: 08.02.2023
(73) Titulaire: Withings, 92130 Issy-les-Moulineaux (FR)
(72) Inventeur: TING, Victor, 92130 ISSY LES MOULINEAUX (FR)
(74) Mandataire: Withings IP
(86) Numéro de dépôt international: PCT/FR2021/050554
(87) Numéro de publication internationale: WO 2021/198609

(56) Documents cités:
- WO-A1-2009/100569
- CN-A- 106 979 814
- CN-Y- 201 255 657

## Description

### Domaine technique

La présente divulgation relève du domaine des balances électroniques et plus particulièrement des pèse personnes, de préférence connectés.

### Technique antérieure

Il est connu de détecter la présence d'une personne ou d'un objet sur une balance avant de mettre en œuvre une mesure du poids présent sur la balance. Ainsi, seule une fonction de détection d'une augmentation de poids par exemple est implémentée régulièrement. Les fonctions plus énergivores telles que la mesure précise du poids ainsi que son affichage sur un écran de la balance ou son envoi à un dispositif distant tel qu'un téléphone portable par exemple ne sont implémentées que ponctuellement lorsqu'une personne ou un objet a été détecté sur la balance.

Dans les dispositifs de l'art antérieur, les fonctions de détection de présence d'une personne ou d'un objet, de mesure précise du poids, notamment sont implémentées par une même unité de contrôle et de commande. Par exemple, le document WO 2009/100569 A1 décrit une balance électronique comprenant un capteur de poids, une unité de commande et un circuit de détection coopérant pour déclencher une mesure de poids tout en réduisant la consommation d'énergie.

Il est connu que les balances électroniques sont alimentées par des piles ou des accumulateurs rechargeables. Une des problématiques est l'autonomie de ces balances électroniques.

Il existe donc un besoin d'augmenter l'autonomie des balances électroniques ou l'espacement entre les recharges des accumulateurs.

### Résumé

Un but de la présente invention est de remédier aux inconvénients de l'art antérieur précités.

L'invention est définie par les revendications indépendantes 1 et 2, auxquelles se rattachent les revendications dépendantes relatives à des modes de réalisation particuliers.

Dans un mode de réalisation, la balance électronique comporte en outre un afficheur, l'unité de commande étant en outre reliée à l'afficheur et configuré pour émettre un signal représentatif de la mesure de poids vers l'afficheur.

Avantageusement, l'unité de commande comprend un processeur et le circuit de détection comprend un circuit logique, de préférence programmable, une horloge et un comparateur. En outre, le circuit logique est configuré pour commander de manière périodique, à un intervalle de temps prédéterminé déterminé en fonction d'un signal d'horloge émis par l'horloge, l'alimentation en tension du capteur de poids, le circuit logique étant en outre relié au comparateur et configuré pour émettre une commande de déclenchement d'une mesure de poids vers l'unité de commande lorsque le comparateur détecte que la mesure de poids est supérieure au seuil prédéterminé. Ainsi, la consommation électrique du circuit de détection, notamment en termes de puissance, est réduite.

Avantageusement, l'unité de commande comprend un microcontrôleur et la commande de déclenchement d'une mesure de poids est une commande d'interruption du microcontrôleur, le microcontrôleur étant configuré pour mettre en œuvre une mesure de poids à réception d'une commande d'interruption. Ainsi, la consommation électrique de l'unité de commande, notamment en termes de puissance, est réduite.

Dans un premier mode de réalisation de l'invention, la balance électronique comprend en outre:
* une source de tension,
* au moins un premier commutateur reliant la source de tension au capteur de poids commandé par l'unité de commande et le circuit de détection,
* un premier amplificateur comportant deux entrées branchées à deux bornes du capteur de poids et une sortie reliée au circuit logique,
* un second amplificateur comportant deux entrées branchées aux deux bornes du capteur de poids et une sortie reliée à l'unité de commande,
* un second commutateur reliant la source de tension au second amplificateur, le second commutateur étant commandé par l'unité de commande. En outre, le premier amplificateur est distinct du second amplificateur, le second amplificateur consommant une énergie électrique supérieure à celle du premier amplificateur. Le circuit de détection est en outre configuré pour :
* commander le au moins un premier commutateur de manière à relier le capteur de poids à la source de tension pendant une première durée prédéterminée. L'unité de commande est en outre configurée pour :
* commander le au moins un premier commutateur de manière à relier le capteur de poids à la source de tension pendant une seconde durée prédéterminée,
* commander le second commutateur de manière à permettre une mesure de poids pendant la seconde durée, la seconde durée étant supérieure à la première durée.

Ainsi, un premier amplificateur moins précis, moins couteux et moins gourmand en énergie que le second amplificateur peut être utilisé.

Dans un second mode de réalisation de l'invention, la balance électronique comprend en outre :
* une source de tension,
* au moins un premier commutateur reliant la source de tension au capteur de poids,
* un amplificateur comportant deux entrées branchées à deux bornes du capteur de poids et une sortie, et
* au moins un second commutateur reliant la source de tension à l'amplificateur. En outre, le circuit de détection et l'unité de commande sont reliés à l'au moins un premier commutateur, à l'au moins un second commutateur et à la sortie de l'amplificateur. Le circuit de détection est en outre configuré pour :
* commander l'au moins un premier commutateur de manière à relier le capteur de poids à la source de tension pendant une première durée prédéterminée,
* commander l'au moins un second commutateur de manière à permettre une détection d'une augmentation de poids pendant la première durée.

Par ailleurs, l'unité de commande est en outre configurée pour :
* commander l'au moins un premier commutateur de manière à relier le capteur de poids à la source de tension pendant une seconde durée prédéterminée,
* commander l'au moins un second commutateur de manière à permettre une mesure de poids pendant la seconde durée, la seconde durée étant supérieure à la première durée.

Ainsi, le même amplificateur peut être utilisé en sortie du capteur de poids ce qui permet de limiter les coûts notamment et réduit le nombre d'étapes pour la fabrication du circuit de détection.

Dans un mode de réalisation préféré, la balance électronique est un pèse personne et le capteur de poids comprend au moins deux jauges de contrainte combinées dans au moins un montage de type pont de wheatstone. L'utilisation d'un montage de type pont de wheatstone permet de pouvoir mesurer les variations de résistances induites par le poids sur la balance sur les jauges de contrainte avec plus de précision.

Dans un mode de réalisation particulier, l'unité de commande est en outre configurée pour envoyer une commande de changement de fréquence de détection au circuit de détection. La fréquence de détection d'une augmentation de poids par le circuit de détection peut alors être changée en fonction de la plage horaire d'utilisation afin limiter la consommation électrique lorsque la balance est peu utilisée ou susceptible d'être peu utilisée. On augmente ainsi encore l'autonomie de la balance.

Dans un mode de mise en œuvre de l'invention, il est proposé un procédé de commande d'une balance électronique selon l'un des modes de réalisation décrits ci-dessus, le procédé comprenant les étapes suivantes :
a. commande de manière périodique d'une alimentation en tension du capteur de poids par le circuit de détection, et détection par ledit circuit de détection d'une augmentation de poids supérieure à un seuil prédéterminé,
b. lorsqu'une augmentation de poids supérieure au seuil prédéterminé est détectée, envoi d'une commande de déclenchement d'une mesure de poids à l'unité de commande,
c. suite à la réception de la commande de déclenchement par l'unité de commande :
   i. sortie de l'unité de commande d'un état de veille, et
   ii. mise en œuvre, par l'unité de commande, d'une mesure du poids sur la balance, comprenant :
      1. une émission d'une commande d'alimentation en tension du capteur de poids, et
      2. un traitement de la tension aux bornes du capteur de poids.

Ainsi, l'unité de commande, en veille la plupart du temps, n'effectue une mesure du poids présent sur la balance que lorsque le circuit de détection a détecté qu'une personne ou un objet était présent sur la balance. On économise ainsi de l'énergie électrique et on augmente l'autonomie. En effet, de manière avantageuse, le circuit de détection consomme moins d'énergie que l'unité de commande, le circuit de détection consommant moins de puissance que l'unité de commande.

Dans un mode de réalisation, la commande d'une alimentation en tension du capteur de poids par le circuit de détection est de durée inférieure à la commande d'alimentation en tension du capteur de poids par l'unité de commande. On économise ainsi de l'énergie électrique en alimentant au minimum le capteur de poids par le circuit de détection, les mesures de poids réalisées par l'unité de commande étant plus longues afin de permettre par exemple un filtrage des mesures effectuées pour obtenir une meilleure précision de mesure du poids mesuré.

Dans un mode de réalisation, le procédé de commande comprend en outre les étapes suivantes :
- enregistrement d'un historique d'utilisation de la balance (par exemple par l'unité de commande ou par un serveur distant),
- détermination d'au moins deux plages horaires différentes en fonction de l'historique d'utilisation, une première plage horaire correspondant à une utilisation fréquente de la balance et une deuxième plage horaire correspondant à une utilisation moins fréquente de la balance (par exemple par l'unité de commande ou par un serveur distant),
- commande de changement de fréquence de détection au circuit de détection au début de chacune des premières et secondes plages horaires.

Ainsi, il est possible de déterminer les plages horaires pendant lesquelles la balance est peu ou très utilisée par exemple et adapter ces plages horaires à l'utilisateur de la balance. Cette adaptation permet encore d'optimiser la consommation électrique de la balance, une fréquence moindre de détection d'une augmentation de poids sur la balance étant utilisée pendant les plages horaires de faible utilisation.

Dans un autre mode de mise en œuvre de l'invention, il est proposé un programme informatique comportant des instructions pour la mise en œuvre, par l'unité de commande, d'une partie du procédé décrit ci-dessus, suite à la réception d'une commande de déclenchement d'une mesure de poids, comprenant des étapes de:
- sortie de l'unité de commande d'un état de veille, et
- mise en œuvre d'une mesure du poids sur la balance comprenant :
   * une émission d'une commande d'alimentation en tension du capteur de poids, et
   * un traitement de la mesure effectuée par le capteur de poids,
lorsque ce programme est exécuté par un processeur.

Dans un autre mode de mise en œuvre de l'invention, il est proposé un support d'enregistrement non transitoire, lisible par un ordinateur, sur lequel est enregistré un tel programme.

### Brève description des dessins

D'autres caractéristiques, détails et avantages apparaîtront à la lecture de la description détaillée ci-après, et à l'analyse des dessins annexés, sur lesquels :
**Fig. 1**

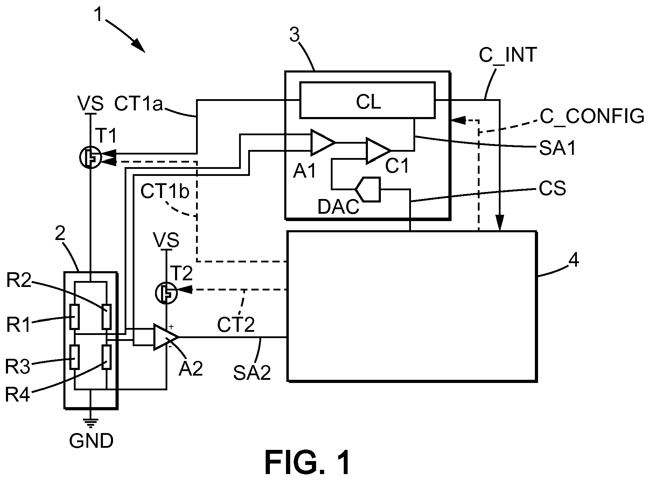

   [Fig. 1] montre une balance électronique selon un mode de réalisation.
**Fig. 2**

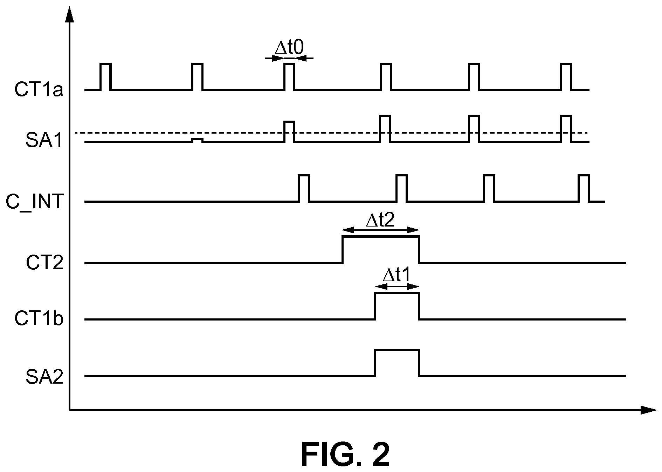

   [Fig. 2] montre un chronogramme des signaux échangés lors de l'implémentation d'un procédé de commande d'une balance électrique selon un mode de réalisation.
**Fig. 3**

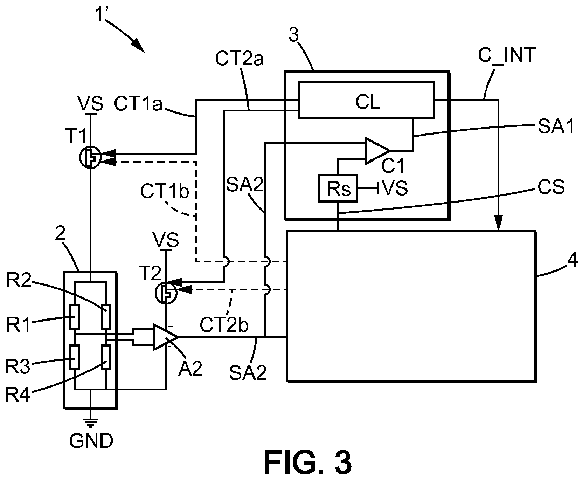

   [Fig. 3] montre une balance électronique selon une variante de réalisation.

### Description des modes de réalisation

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Il est maintenant fait référence à la figure 1.

La figure 1 représente une balance électronique 1 selon un premier mode de réalisation. La balance électronique comprend un capteur de poids 2, un circuit de détection 3 et une unité de commande 4. La balance électronique comprend également des batteries ou des accumulateurs rechargeables (non représentés) permettant d'alimenter en tension le capteur de poids 2, le circuit de détection 3 et l'unité de commande 4.

Le capteur de poids 2 comprend une ou plusieurs jauges de contrainte de préférence extensométriques. Il peut s'agir de jauges extensométriques simples comprenant un seul élément sensible à la contrainte verticale ou de jauges extensométriques doubles comprenant un premier élément dont la résistance augmente sous l'effet d'une compression verticale et un deuxième élément dont la résistance diminue sous l'effet d'une compression verticale. Les résistances sont typiquement de l'ordre de 500Ω voire 1kΩ.

Les jauges de contrainte peuvent être combinées dans un montage de type pont de wheatstone afin de déterminer une variation de résistance globale induite par la contrainte verticale représentative du poids appliqué sur les jauges de contrainte. De manière connue, dans le cas d'un pèse personne par exemple, le capteur de poids 2 peut comprendre deux jauges de contrainte doubles ou quatre jauges de contrainte (simples ou doubles) combinées dans un montage de type pont de wheatstone tel que décrit par exemple dans la demande US4177868A, ou combinées dans un montage comprenant plusieurs ponts de wheatstone tel que décrit par exemple dans la demande WO2014013208A1.

Ainsi, les résistances R1, R2, R3 et R4 représentées sur la figure 2 peuvent correspondre chacune à une jauge de contrainte simple, ou à deux éléments d'une jauge de contrainte double. Par exemple, les résistances R2, R3 peuvent correspondre à un premier élément d'une jauge de contrainte dont la résistance augmente sous l'effet d'une compression verticale et les résistances R1, R4 peuvent correspondre au second élément dont la résistance diminue sous l'effet d'une compression verticale pour deux jauges de contrainte doubles, respectivement.

Les deux bornes du capteur de poids 2, i.e. les points de référence du montage de type pont de wheatstone par exemple, sont connectées aux deux entrées de deux amplificateurs distincts, A1 et A2 afin d'amplifier la tension aux bornes du capteur de poids. On notera que l'amplificateur A1 consomme moins d'énergie que l'amplificateur A2. Pour cette raison, l'amplificateur A1 peut être constamment alimenté en tension alors que l'amplificateur A2 n'est alimenté en tension que lorsque des mesures de poids sont effectuées. On limite ainsi la consommation liée à l'amplification de la tension aux bornes du capteur de poids.

Le circuit de détection 3 est relié au capteur de poids 2, plus précisément à la sortie de l'amplificateur A1, et à l'unité de commande 4. L'unité de commande 4 est reliée au circuit de détection 3 et au capteur de poids 2, plus précisément à la sortie de l'amplificateur A2.

Le circuit de détection 3 est configuré pour commander de manière périodique une alimentation en tension du capteur de poids 2 en envoyant un signal de commande CT1a correspondant à un commutateur T1 reliant une source de tension stabilisée VS, par exemple à 3V, au capteur de poids 2. Le circuit de détection 3 est également configuré pour détecter la présence d'un objet ou d'une personne à peser par détection d'une augmentation de poids. Lorsqu'une personne ou un objet à peser est détecté, le circuit de détection 3 envoie une commande de déclenchement C_INT d'une mesure de poids à l'unité de commande.

L'unité de commande 4 est configurée pour, suite à la réception de la commande de déclenchement C_INT, sortir d'un état de veille et mettre en œuvre une mesure de poids sur la balance. Pour ce faire, l'unité de commande 4 émet une commande d'alimentation CT1b au commutateur T1 et une commande CT2 d'alimentation au commutateur T2. L'unité de commande 4 effectue également un traitement de la tension aux bornes du capteur de poids et plus particulièrement du signal amplifié SA2 en sortie de l'amplificateur A2 comme explicité ultérieurement.

Ainsi, dans ce mode de réalisation, l'unité de commande 4, destinée notamment à mesurer avec précision le poids sur la balance n'est réveillée que lorsqu'une augmentation de poids est détectée par le circuit de détection 3. On notera que le circuit de détection 3 est moins consommateur en énergie que l'unité de commande 4 (de l'ordre de quelques centaines de nanoWatts) de sorte que le circuit de détection 3 peut être allumé en permanence pour détecter la présence d'un objet ou une personne à peser sur la balance alors que l'unité de commande 4 n'est allumée que lorsqu'une mesure de poids doit être effectuée. Avantageusement, le circuit de détection 3 est moins consommateur de puissance que l'unité de commande 4 de sorte qu'on augmente ainsi l'autonomie de la balance électronique. On réalise ainsi une économie en termes de consommation de puissance de l'ordre de 85 % par rapport à une balance électronique dans laquelle l'unité de commande est allumée de manière périodique pour assurer le processus de surveillance et la détection de la présence d'une personne ou d'un objet sur la balance. Celle-ci consomme en effet de l'ordre de 200 µW de puissance alors que la balance électronique décrite ici consomme de l'ordre de 30 µW dans les mêmes conditions d'utilisation. Par ailleurs, on augmente aussi l'autonomie de la balance électronique en alimentant en tension l'amplificateur A2 que lorsque cela est nécessaire.

On notera que l'unité de commande 4 est en outre configurée pour afficher le poids mesuré sur un afficheur de la balance ou pour transmettre le poids mesuré à un terminal distant connecté à la balance tel un téléphone portable intelligent par exemple, dans le cas d'une balance connectée.

Dans l'exemple décrit ici, le circuit de détection 3 comprend l'amplificateur A1 précédemment écrit, un comparateur C1 et un circuit logique CL. Le comparateur C1 permet de vérifier si la tension mesurée aux bornes du capteur de poids 2, amplifiée par l'amplificateur A1, est supérieure à une valeur seuil prédéterminée. Dans l'exemple décrit ici, la valeur de seuil prédéterminée est fournie par l'unité de commande 4 au comparateur C1 par le biais d'un signal numérique converti en une tension analogique par un convertisseur numérique analogique DAC (« Digital Analogic Converter » en anglais). Le comparateur C1 est relié au circuit logique CL, de sorte que, lorsque le signal en sortie de l'amplificateur A1 est supérieur à la valeur prédéterminée, le circuit logique envoie la commande de déclenchement d'une mesure de poids à l'unité de commande 4. On notera que le circuit logique CL peut comporter une horloge intégrée et être de structure plus ou moins complexe et programmable, i.e. reconfigurable, par exemple.

Dans l'exemple décrit ici, l'unité de commande 4 comprend un microcontrôleur et la commande de déclenchement d'une mesure de poids C_INT peut être une commande d'interruption envoyée à une entrée d'interruption du microcontrôleur. Le microcontrôleur est donc dans ce cas configuré pour sortir de veille et mettre en œuvre une mesure de poids sur la balance à la réception de la commande d'interruption C_INT.

Avantageusement, l'unité de commande 4 comprend ou est reliée à un capteur de température (non représenté). Ainsi, l'unité de commande est en outre configurée pour adapter le seuil du comparateur C1 en fonction de la tension aux bornes du capteur de température. Pour ce faire, l'unité de commande 4 envoie un signal de commande CS dont la valeur est représentative du seuil prédéterminé à appliquer au comparateur C1.

Optionnellement, le circuit logique CL peut être partiellement reconfigurable par l'unité de commande 4 au moyen d'une commande C_CONFIG comme illustré par la flèche en pointillé. Cette commande C_CONFIG peut être utilisée pour faire varier la fréquence d'émission de la commande CT1a d'alimentation en tension du capteur de poids 2. On peut ainsi baisser la fréquence de détection, lorsque la balance est moins susceptible d'être utilisée par exemple la nuit ce qui permet de réduire encore la consommation de la balance et d'augmenter son autonomie.

Dans un mode de réalisation, une première fréquence de détection f1, correspondant à un intervalle de temps ΔT1 entre chaque émission d'une commande CT1a, peut être appliquée sur une première plage horaire et une seconde fréquence de détection f2, correspondant à un intervalle de temps ΔT2, peut être appliquée sur une seconde plage horaire. Les deux plages horaires et les deux fréquences peuvent être prédéfinies ou être adaptées à l'utilisation faite de la balance en fonction de l'historique des prises de mesure faite par l'unité de commande à l'aide de l'horloge interne du processeur. Par exemple, la fréquence de détection peut être de 1 Hz entre 4h30 et 23h30, lorsque la balance est la plus susceptible d'être utilisée ou est la plus utilisée et de 0,5 Hz entre 23h30 et 4h30.

On notera que les jours de la semaine peuvent également être pris en compte pour définir les plages horaires à appliquer.

L'unité de commande est alors configurée pour envoyer, au début de chaque plage horaire, une commande C_CONFIG permettant de changer la fréquence de détection. Par exemple, l'envoi d'une commande spécifique C_CONFIG peut permettre de commander une bascule entre deux compteurs TIMER 1 et TIMER 2 permettant de faire varier l'intervalle de temps entre chaque émission d'une commande CT1a.

L'unité de commande 4 peut être alors configurée pour sortir ponctuellement de veille au début d'une plage horaire pour envoyer la commande C_CONFIG correspondante lorsque l'horloge interne détecte le début d'une des plages horaires. Alternativement, l'unité de commande 4 peut être configurée pour envoyer la commande C_CONFIG sans réveiller le processeur par le biais de l'horloge interne du processeur directement.

La figure 2 illustre un chronogramme des différents signaux émis et reçus par le circuit de détection 3 et l'unité de commande 4.

Le signal de commande CT1a est émis de manière périodique par le circuit de détection 3 et permet d'alimenter le capteur de poids 2 en tension pendant une durée Δt0 prédéterminée. Le signal SA1 correspond à la sortie de l'amplificateur 1. Il est donc proportionnel au poids mesuré par le capteur de poids 2. On remarque que la commande de déclenchement de mesure de poids, i.e. la commande d'interruption C_INT, n'est envoyée que lorsque le signal SA1 est supérieur à un seuil prédéterminé illustré par la ligne en pointillés.

Lorsque l'unité de commande 4 est sortie de veille, une commande CT2 d'alimentation en tension de l'amplificateur A2 est émise puis une commande d'alimentation CT1b en tension du capteur de poids 2 est émise. On notera que la durée d'alimentation Δt2 de l'amplificateur A2 est supérieure à la durée d'alimentation Δt1 du capteur de poids et qu'elle est mise en œuvre en partie pendant une durée déterminée avant l'émission de la commande CT1b d'alimentation du capteur de poids 2. Il est en effet nécessaire d'attendre la stabilisation de l'amplificateur A2 avant d'effectuer une mesure de poids. Enfin, le signal SA2 en sortie de l'amplificateur A2 est mesuré. Il est représentatif de la tension aux bornes du capteur de poids 2. Ce signal est traité par le processeur de l'unité de commande 4 pour déterminer le poids mesuré notamment. La durée Δt1 d'alimentation du capteur de poids et donc de mesure peut varier et être par exemple de l'ordre de 0,5 ms lorsqu'une étape de filtrage est mise en œuvre par le processeur de l'unité de commande 4 pour obtenir une mesure plus précise du poids mesuré par exemple.

Dans un mode de réalisation, correspondant à celui illustré en référence à la figure 2, le circuit de détection 3 est toujours actif et continue à émettre des commandes CT1a et C_INT tant que le comparateur détecte que le signal SA1 est supérieur au seuil prédéterminé illustré par la ligne en pointillés. L'unité de commande 4 étant déjà réveillée, les commandes de déclenchement de mesure de poids ou d'interruption C_INT successives ne sont alors pas prises en compte. La mesure de poids se poursuit alors. Pour ce faire, l'unité de commande 4 est configurée pour ne pas prendre en compte les commandes de déclenchement de mesure de poids ou d'interruption ultérieures tant que la mesure de poids est en cours.

On peut cependant tout à fait envisager que le circuit de détection soit configuré pour arrêter d'envoyer d'autres commandes de déclenchement de mesure de poids, ici une commande d'interruption C_INT, après que la première commande de déclenchement a été envoyée. Dans ce cas, le circuit de détection peut être configuré pour envoyer à nouveau une commande de déclenchement de mesure de poids, après avoir attendu un intervalle de temps prédéterminé que la mesure de poids effectuée par l'unité de commande soit terminée.

La figure 3 illustre une variante de réalisation de la balance électronique de la figure 1. La balance électronique 1' décrite ici est assez similaire à celle décrite en référence à la figure 1 et comporte donc les mêmes références pour des éléments identiques.

Dans cette variante de réalisation, le capteur de poids 2 n'est relié qu'à un amplificateur A2 (au lieu de deux amplificateurs A1 et A2 comme illustré dans la figure 1). La sortie de l'amplificateur A2 est donc reliée à l'unité de commande 4 et au circuit de détection 3 et plus particulièrement au comparateur C1 tel que décrit précédemment. Dans ce cas, l'amplificateur A2 n'est alimenté en tension que lorsque le commutateur T2 reçoit une commande CT2a, CT2b provenant du circuit de détection 3 et de l'unité de commande 4, respectivement. Cela permet de limiter la consommation d'énergie en alimentant l'amplificateur A2 que lorsque c'est nécessaire. On notera que les commandes CT2a et CT2b sont d'une même durée Δt2 afin de permettre la stabilisation de l'amplificateur avant qu'une commande CT1a, CT2b d'alimentation en tension du capteur de poids ne soit émise.

Dans ce cas, l'amplificateur A2 n'est alimenté en tension que lorsque le commutateur T2 reçoit une commande CT2a, CT2b provenant du circuit de détection 3 et de l'unité de commande 4, respectivement. Cela permet de limiter la consommation d'énergie en alimentant l'amplificateur A2 que lorsque c'est nécessaire. On notera que les commandes CT2a et CT2b sont d'une même durée Δt2 afin de permettre la stabilisation de l'amplificateur avant qu'une commande CT1a, CT2b d'alimentation en tension du capteur de poids ne soit émise.

Dans ce cas, l'amplificateur A2 n'est alimenté en tension que lorsque le commutateur T2 reçoit une commande CT2a, CT2b provenant du circuit de détection 3 et de l'unité de commande 4, respectivement. Cela permet de limiter la consommation d'énergie en alimentant l'amplificateur A2 que lorsque c'est nécessaire. On notera que les commandes CT2a et CT2b sont d'une même durée Δt2 afin de permettre la stabilisation de l'amplificateur avant qu'une commande CT1a, CT2b d'alimentation en tension du capteur de poids ne soit émise.

On notera que dans la variante de réalisation décrite ici, le circuit logique CL n'est pas reconfigurable par l'unité de commande 4 de sorte qu'une seule fréquence de détection prédéfinie est utilisée par le circuit de détection 3.

Par ailleurs, le seuil de comparaison fourni au comparateur C1 peut être lui aussi fixe et défini à l'aide de résistances placées entre l'une des entrées du comparateur C1 et la source de tension VS. Sur la figure 3, seule une résistance RS est représentée mais celle-ci peut être remplacée par plusieurs résistances en série et/ou en parallèle ou par une résistance variable dont la valeur peut être commandée par le circuit logique CL par exemple.

Par ailleurs, lorsque le seuil de comparaison est variable, il peut être commandé par l'unité de commande, et plus particulièrement par le signal de commande CS émis, en fonction de la température de la pièce lue par le capteur de température.

L'utilisation d'un circuit logique non-reconfigurable par l'unité de commande 4 permet d'utiliser des composants moins couteux et moins consommateurs d'énergie.

## Revendications

1. Balance électronique (1 ; 1') comprenant :
- un capteur de poids (2) ,
- une unité de commande (4) reliée au capteur de poids (2),
- un circuit de détection (3) relié à l'unité de commande (4) et au capteur de poids (2),
dans lequel :
- le circuit de détection (3) est configuré pour commander de manière périodique (CT1a) une alimentation en tension (Vs) du capteur de poids (2) et pour détecter une augmentation de poids supérieure à un seuil prédéterminé et, lorsque ladite augmentation de poids est détectée, envoyer une commande de déclenchement d'une mesure de poids (C_INT) à l'unité de commande (4), et
- l'unité de commande (4) est configurée pour, suite à la réception de la commande de déclenchement (C_INT), sortir d'un état de veille et mettre en oeuvre une mesure du poids sur la balance en émettant une commande d'alimentation en tension du capteur de poids (CT1b) et en effectuant un traitement de la tension aux bornes du capteur de poids (2),
le circuit de détection (3) étant distinct de l'unité de commande (4) ; **caractérisée en ce que**:
- la balance électronique (1) comprend en outre:
* une source de tension (VS),
* au moins un premier commutateur (T1) reliant la source de tension (VS) au capteur de poids (2) commandé par l'unité de commande (4) et le circuit de détection (3),
* un premier amplificateur (A1) comportant deux entrées branchées à deux bornes du capteur de poids (2) et une sortie reliée au circuit logique (CL),
* un second amplificateur (A2) comportant deux entrées branchées aux deux bornes du capteur de poids (2) et une sortie reliée à l'unité de commande (4),
* un second commutateur (T2) reliant la source de tension (VS) au second amplificateur (A2), le second commutateur (T2) étant commandé par l'unité de commande (4),
le premier amplificateur (A1) étant distinct du second amplificateur (A2), le second amplificateur (A2) consommant une énergie électrique supérieure à celle du premier amplificateur (A1),
- le circuit de détection (3) est en outre configuré pour :
* commander (CT1a) le au moins un premier commutateur (T1) de manière à relier le capteur de poids (2) à la source de tension (VS) pendant une première durée prédéterminée (Δt0),
- l'unité de commande (4) est en outre configurée pour :
* commander (CT1b) le au moins un premier commutateur (T1) de manière à relier le capteur de poids (2) à la source de tension (VS) pendant une seconde durée prédéterminée (Δt1),
* commander (CT2) le second commutateur (T2) de manière à permettre une mesure de poids pendant la seconde durée(Δt1), la seconde durée (Δt1) étant supérieure à la première durée (Δt0).

2. Balance électronique (1 ; 1') comprenant :
- un capteur de poids (2) ,
- une unité de commande (4) reliée au capteur de poids (2),
- un circuit de détection (3) relié à l'unité de commande (4) et au capteur de poids (2),
dans lequel :
- le circuit de détection (3) est configuré pour commander de manière périodique (CT1a) une alimentation en tension (Vs) du capteur de poids (2) et pour détecter une augmentation de poids supérieure à un seuil prédéterminé et, lorsque ladite augmentation de poids est détectée, envoyer une commande de déclenchement d'une mesure de poids (C_INT) à l'unité de commande (4), et
- l'unité de commande (4) est configurée pour, suite à la réception de la commande de déclenchement (C_INT), sortir d'un état de veille et mettre en oeuvre une mesure du poids sur la balance en émettant une commande d'alimentation en tension du capteur de poids (CT1b) et en effectuant un traitement de la tension aux bornes du capteur de poids (2),
le circuit de détection (3) étant distinct de l'unité de commande (4) ; **caractérisée en ce que**:
- la balance électronique (1') comprend en outre :
* une source de tension (Vs),
* au moins un premier commutateur (T1) reliant la source de tension (VS) au capteur de poids (2),
* un amplificateur (A2) comportant deux entrées branchées à deux bornes du capteur de poids (2) et une sortie, et
* au moins un second commutateur (T2) reliant la source de tension (VS) à l'amplificateur (A2),
- le circuit de détection (3) et l'unité de commande (4) sont reliés à l'au moins un premier commutateur (T1), à l'au moins un second commutateur (T2) et à la sortie de l'amplificateur (A2),
- le circuit de détection (3) est en outre configuré pour :
* commander (CT1a) l'au moins un premier commutateur (T1) de manière à relier le capteur de poids (2) à la source de tension (VS) pendant une première durée prédéterminée (Δt0),
* commander (CT2a) l'au moins un second commutateur (T2) de manière à permettre une détection d'une augmentation de poids pendant la première durée (Δt0)
- l'unité de commande (4) est en outre configurée pour :
* commander (CT1b) l'au moins un premier commutateur (T1) de manière à relier le capteur de poids (2) à la source de tension (VS) pendant une seconde durée prédéterminée (Δt1),
* commander (CT2b) l'au moins un second commutateur (T2) de manière à permettre une mesure de poids pendant la seconde durée (Δt1), la seconde durée (Δt1) étant supérieure à la première durée (Δt0).

3. Balance électronique (1 ; 1') selon la revendication 1 ou 2, dans laquelle la balance électronique comporte en outre un afficheur, l'unité de commande (4) étant en outre reliée à l'afficheur et configurée pour émettre un signal représentatif de la mesure de poids vers l'afficheur.

4. Balance électronique (1 ; 1') selon l'une quelconque des revendications précédentes, dans laquelle :
- l'unité de commande (4) comprend un processeur,
- le circuit de détection (3) comprend un circuit logique (CL), de préférence programmable, une horloge et un comparateur (C1),
le circuit logique (CL) étant configuré pour commander de manière périodique, à un intervalle de temps prédéterminé déterminé en fonction d'un signal d'horloge émis par l'horloge, l'alimentation en tension du capteur de poids (CT1a),
le circuit logique (CL) étant en outre relié au comparateur(C1) et configuré pour émettre une commande de déclenchement d'une mesure de poids (C_INT) vers l'unité de commande (4) lorsque le comparateur (C1) détecte que la mesure de poids est supérieure au seuil prédéterminé.

5. Balance électronique (1 ; 1') selon l'une quelconque des revendications précédentes, dans laquelle l'unité de commande (4) comprend un microcontrôleur et la commande de déclenchement d'une mesure de poids est une commande d'interruption du microcontrôleur (C_INT), le microcontrôleur (4) étant configuré pour mettre en œuvre une mesure de poids à réception d'une commande d'interruption (C_INT).

6. Balance électronique (1 ; 1') selon l'une quelconque des revendications précédentes, dans laquelle la balance électronique (1 ; 1') est un pèse personne et le capteur de poids (2) comprend au moins deux jauges de contrainte combinées dans au moins un montage de type pont de wheatstone.

7. Balance électronique (1 ; 1') selon l'une quelconque des revendications précédentes, dans laquelle l'unité de commande (4) est en outre configurée pour envoyer une commande de changement de fréquence de détection (C_CONFIG) au circuit de détection (3).

8. Procédé de commande d'une balance électronique (1 ; 1') selon l'une quelconque des revendications précédentes, dans lequel le procédé comprend les étapes suivantes :
a. commande de manière périodique d'une alimentation en tension (CT1a) du capteur de poids (2) par le circuit de détection (3) et détection par ledit circuit de détection (3) d'une augmentation de poids supérieure à un seuil prédéterminé,
b. lorsqu'une augmentation de poids supérieure au seuil prédéterminé est détectée, envoi d'une commande de déclenchement (C_INT) d'une mesure de poids à l'unité de commande (4),
c. suite à la réception de la commande de déclenchement (C_INT) par l'unité de commande (4):
i. sortie de l'unité de commande d'un état de veille, et
ii. mise en œuvre, par l'unité de commande (4), d'une mesure du poids sur la balance, comprenant :
1. une émission d'une commande d'alimentation en tension (CT1b) du capteur de poids, et
2. un traitement de la tension aux bornes du capteur de poids.

9. Procédé de commande d'une balance électronique selon la revendication précédente, dans laquelle la commande d'une alimentation en tension du capteur de poids par le circuit de détection est de durée inférieure à la commande d'alimentation en tension du capteur de poids par l'unité de commande.

10. Procédé de commande d'une balance électronique selon l'une quelconque des revendications 8 à 9, dans lequel le procédé comprend en outre les étapes suivantes :
- enregistrement d'un historique d'utilisation de la balance,
- détermination d'au moins deux plages horaires différentes en fonction de l'historique d'utilisation, une première plage horaire correspondant à une utilisation fréquente de la balance et une deuxième plage horaire correspondant à une utilisation moins fréquente de la balance,
- commande (C_CONFIG) de changement de fréquence de détection au circuit de détection au début de chacune des premières et secondes plages horaires.

11. Programme informatique comportant des instructions pour la mise en œuvre d'une partie du procédé selon l'une des revendications 8 à 10 par l'unité de commande (4), suite à la réception d'une commande de déclenchement d'une mesure de poids, comprenant des étapes de :
- sortie de l'unité de commande d'un état de veille, et
- mise en œuvre d'une mesure du poids sur la balance comprenant :
* une émission d'une commande d'alimentation en tension du capteur de poids, et
* un traitement de la mesure effectuée par le capteur de poids,
lorsque ce programme est exécuté par un processeur.

12. Support d'enregistrement non transitoire lisible par un ordinateur sur lequel est enregistré un programme selon la revendication 11, lorsque ce programme est exécuté par un processeur.

## Patentansprüche

1. Elektronische Waage (1; 1') mit:
- einen Gewichtssensor (2),
- eine mit dem Gewichtssensor (2) verbundene Steuereinheit (4),
- eine mit der Steuereinheit (4) und dem Gewichtssensor (2) verbundene Auswerteschaltung (3),
wobei:
- die Erfassungsschaltung (3) so ausgelegt ist, dass sie periodisch (CT1a) eine Spannungsversorgung (Vs) des Gewichtssensors (2) zu steuern und eine Gewichtszunahme zu erfassen, die einen vorgegebenen Schwellenwert überschreitet, und, wenn diese Gewichtszunahme erfasst wird, einen Befehl zur Auslösung einer Gewichtsmessung (C_INT) an die Steuereinheit (4) zu senden, und
- die Steuereinheit (4) so ausgelegt ist, dass sie nach dem Empfang des Auslösebefehls (C_INT) aus einem Standby-Zustand heraustritt und eine Gewichtsmessung an der Waage durchführt, indem sie einen Befehl zur Spannungsversorgung des Gewichtssensors (CT1b) ausgibt und eine Auswertung der Spannung an den Anschlüssen des Gewichtssensors (2) vornimmt,
wobei die Erfassungsschaltung (3) von der Steuereinheit (4) getrennt ist;
**dadurch gekennzeichnet, dass**:
- die elektronische Waage (1) außerdem umfasst:
* eine Spannungsquelle (VS),
* mindestens einen ersten Schalter (T1), der die Spannungsquelle (VS) mit dem von der Steuereinheit (4) gesteuerten Gewichtssensor (2) und der Erfassungsschaltung (3) verbindet,
* einen ersten Verstärker (A1) mit zwei Eingängen, die an zwei Anschlüsse des Gewichtssensors (2) angeschlossen sind, und einem Ausgang, der mit der Logikschaltung (CL) verbunden ist,
* einen zweiten Verstärker (A2) mit zwei Eingängen, die an die beiden Anschlüsse des Gewichtssensors (2) angeschlossen sind, und einem Ausgang, der mit der Steuereinheit (4) verbunden ist,
* einen zweiten Schalter (T2), der die Spannungsquelle (VS) mit dem zweiten Verstärker (A2) verbindet, wobei der zweite Schalter (T2) von der Steuereinheit (4) gesteuert wird,
wobei der erste Verstärker (A1) vom zweiten Verstärker (A2) getrennt ist und der zweite Verstärker (A2) mehr elektrische Energie verbraucht als der erste Verstärker (A1),
- die Erfassungsschaltung (3) ist ferner so ausgelegt, dass sie:
* den mindestens einen ersten Schalter (T1) so anzusteuern (CT1a), dass der Gewichtssensor (2) während einer ersten vorgegebenen Zeitdauer (Δ t0) mit der Spannungsquelle (VS) verbunden wird,
- die Steuereinheit (4) ist ferner so ausgelegt, dass sie:
* den mindestens einen ersten Schalter (T1) so anzusteuern (CT1b), dass der Gewichtssensor (2) während einer zweiten vorgegebenen Zeitspanne (Δ t1) mit der Spannungsquelle (VS) verbunden wird,
* den zweiten Schalter (T2) so anzusteuern (CT2), dass während der zweiten Zeitspanne (Δ t1) eine Gewichtsmessung ermöglicht wird, wobei die zweite Zeitspanne (Δ t1) länger ist als die erste Zeitspanne (Δ t0).

2. Elektronische Waage (1; 1') mit:
- einen Gewichtssensor (2),
- eine mit dem Gewichtssensor (2) verbundene Steuereinheit (4),
- eine mit der Steuereinheit (4) und dem Gewichtssensor (2) verbundene Auswerteschaltung (3),
wobei:
- die Erfassungsschaltung (3) so ausgelegt ist, dass sie periodisch (CT1a) eine Spannungsversorgung (Vs) des Gewichtssensors (2) zu steuern und eine Gewichtszunahme zu erfassen, die einen vorgegebenen Schwellenwert überschreitet, und, wenn diese Gewichtszunahme erfasst wird, einen Befehl zum Auslösen einer Gewichtsmessung (C_INT) an die Steuereinheit (4) zu senden, und
- die Steuereinheit (4) so ausgelegt ist, dass sie nach dem Empfang des Auslösebefehls (C_INT) aus einem Standby-Zustand heraustritt und eine Gewichtsmessung an der Waage durchführt, indem sie einen Befehl zur Spannungsversorgung des Gewichtssensors (CT1b) ausgibt und eine Auswertung der Spannung an den Anschlüssen des Gewichtssensors (2) vornimmt,
wobei die Erfassungsschaltung (3) von der Steuereinheit (4) getrennt ist;
**dadurch gekennzeichnet, dass**:
- die elektronische Waage (1') umfasst außerdem:
* eine Spannungsquelle (Vs),
* mindestens einen ersten Schalter (T1), der die Spannungsquelle (Vs) mit dem Gewichtssensor (2) verbindet,
* einen Verstärker (A2) mit zwei Eingängen, die an zwei Anschlüsse des Gewichtssensors (2) angeschlossen sind, und einem Ausgang, sowie
* mindestens einen zweiten Schalter (T2), der die Spannungsquelle (VS) mit dem Verstärker (A2) verbindet,
- die Auswerteschaltung (3) und die Steuereinheit (4) sind mit dem mindestens einen ersten Schalter (T1), dem mindestens einen zweiten Schalter (T2) und dem Ausgang des Verstärkers (A2) verbunden,
- die Erfassungsschaltung (3) ist ferner so ausgelegt, dass sie:
* den mindestens einen ersten Schalter (T1) so anzusteuern (CT1a), dass der Gewichtssensor (2) während einer ersten vorgegebenen Zeitdauer (Δ t0) mit der Spannungsquelle (VS) verbunden wird,
* den mindestens einen zweiten Schalter (T2) so anzusteuern (CT2a), dass während der ersten Zeitspanne (Δ t0) eine Gewichtszunahme erfasst werden kann,
- die Steuereinheit (4) ist ferner so ausgelegt, dass sie:
* den mindestens einen ersten Schalter (T1) so anzusteuern (CT1b), dass der Gewichtssensor (2) während eines zweiten vorgegebenen Zeitraums (Δ t1) mit der Spannungsquelle (VS) verbunden wird,
* den mindestens einen zweiten Schalter (T2) so anzusteuern (CT2b), dass während der zweiten Zeitspanne (Δ t1) eine Gewichtsmessung ermöglicht wird, wobei die zweite Zeitspanne (Δ t1) länger ist als die erste Zeitspanne (Δ t0).

3. Elektronische Waage (1; 1') nach Anspruch 1 oder 2, wobei die elektronische Waage ferner eine Anzeige umfasst, wobei die Steuereinheit (4) zudem mit der Anzeige verbunden und so ausgelegt ist, dass sie ein Signal, das den Gewichtswert repräsentiert, an die Anzeige sendet.

4. Elektronische Waage (1; 1') gemäß einem der vorstehenden Ansprüche, wobei:
- die Steuereinheit (4) einen Prozessor umfasst,
- die Erfassungsschaltung (3) eine vorzugsweise programmierbare Logikschaltung (CL), einen Taktgeber und einen Komparator (C1) umfasst,
wobei die Logikschaltung (CL) so konfiguriert ist, dass sie in einem vorgegebenen Zeitintervall, das in Abhängigkeit von einem vom Taktgeber ausgegebenen Taktsignal bestimmt wird, periodisch die Spannungsversorgung des Gewichtssensors (CT1a) steuert,
wobei die Logikschaltung (CL) ferner mit dem Komparator (C1) verbunden und so ausgelegt ist, dass sie einen Befehl zum Auslösen einer Gewichtsmessung (C_INT) an die Steuereinheit (4) sendet, wenn der Komparator (C1) feststellt, dass das gemessene Gewicht den vorgegebenen Schwellenwert überschreitet.

5. Elektronische Waage (1; 1') gemäß einem der vorstehenden Ansprüche, wobei die Steuereinheit (4) einen Mikrocontroller umfasst und der Befehl zum Auslösen einer Gewichtsmessung ein Interrupt-Befehl des Mikrocontrollers (C_INT) ist, wobei der Mikrocontroller (4) so konfiguriert ist, dass er bei Empfang eines Interrupt-Befehls (C_INT) eine Gewichtsmessung durchzuführen.

6. Elektronische Waage (1; 1') gemäß einem der vorstehenden Ansprüche, wobei die elektronische Waage (1; 1') eine Personenwaage ist und der Gewichtssensor (2) mindestens zwei Dehnungsmessstreifen umfasst, die in mindestens einer Wheatstone-Brücken-Schaltung kombiniert sind.

7. Elektronische Waage (1; 1') gemäß einem der vorstehenden Ansprüche, wobei die Steuereinheit (4) ferner so ausgelegt ist, dass sie einen Befehl zur Änderung der Erfassungsfrequenz (C_CONFIG) an die Erfassungsschaltung (3) sendet.

8. Verfahren zur Steuerung einer elektronischen Waage (1; 1') gemäß einem der vorstehenden Ansprüche, wobei das Verfahren die folgenden Schritte umfasst:
a. periodische Ansteuerung einer Spannungsversorgung (CT1a) des Gewichtssensors (2) durch die Erfassungsschaltung (3) und Erfassung eines Gewichtsanstiegs, der einen vorgegebenen Schwellenwert überschreitet, durch die Erfassungsschaltung (3),
b. wenn eine Gewichtszunahme über dem vorgegebenen Schwellenwert erfasst wird, Senden eines Auslösebefehls (C_INT) für eine Gewichtsmessung an die Steuereinheit (4),
c. nach dem Empfang des Auslösebefehls (C_INT) durch die Steuereinheit (4):
i. Verlassen eines Standby-Zustands durch die Steuereinheit und
ii. Durchführung einer Gewichtsmessung auf der Waage durch die Steuereinheit (4), umfassend:
1. das Senden eines Befehls zur Spannungsversorgung (CT1b) des Gewichtssensors und
2. eine Auswertung der Spannung an den Anschlüssen des Gewichtssensors.

9. Verfahren zur Steuerung einer elektronischen Waage gemäß dem vorstehenden Anspruch, wobei die Ansteuerung der Spannungsversorgung des Gewichtssensors durch die Erfassungsschaltung von kürzerer Dauer ist als die Ansteuerung der Spannungsversorgung des Gewichtssensors durch die Steuereinheit.

10. Verfahren zur Steuerung einer elektronischen Waage gemäß einem der Ansprüche 8 bis 9, wobei das Verfahren ferner die folgenden Schritte umfasst:
- Erfassung eines Nutzungsverlaufs der Waage,
- Bestimmung von mindestens zwei unterschiedlichen Zeitfenstern in Abhängigkeit vom Nutzungsverlauf, wobei ein erstes Zeitfenster einer häufigen Nutzung der Waage und ein zweites Zeitfenster einer weniger häufigen Nutzung der Waage entspricht,
- Ansteuerung (C_CONFIG) der Änderung der Erfassungsfrequenz an der Erfassungsschaltung zu Beginn jedes der ersten und zweiten Zeitfenster.

11. Computerprogramm mit Anweisungen zur Durchführung eines Teils des Verfahrens gemäß einem der Ansprüche 8 bis 10 durch die Steuereinheit (4) nach dem Empfang eines Befehls zum Auslösen einer Gewichtsmessung, umfassend die folgenden Schritte:
- Verlassen eines Standby-Zustands durch die Steuereinheit und
- Durchführung einer Gewichtsmessung an der Waage, umfassend:
* das Senden eines Befehls zur Spannungsversorgung des Gewichtssensors und
* die Verarbeitung der vom Gewichtssensor durchgeführten Messung,
wenn dieses Programm von einem Prozessor ausgeführt wird.

12. Nichtflüchtiger, computerlesbarer Speicherträger, auf dem ein Programm gemäß Anspruch 11 gespeichert ist, wenn dieses Programm von einem Prozessor ausgeführt wird.

## Claims

1. An electronic scale (1; 1') comprising:
- a weight sensor (2),
- a control unit (4) connected to the weight sensor (2),
- a detection circuit (3) connected to the control unit (4) and to the weight sensor (2),
wherein:
- the detection circuit (3) is configured to periodically control (CT1a) a voltage supply (Vs) to the weight sensor (2) and to detect a weight increase exceeding a predetermined threshold and, when said weight increase is detected, to send a command (C_INT) to the control unit (4) to initiate a weight measurement, and
- the control unit (4) is configured to, upon receiving the trigger command (C_INT), exit a standby state and initiate a weight measurement on the scale by issuing a command to supply voltage to the weight sensor (CT1b) and by processing the voltage across the weight sensor (2),
the detection circuit (3) being separate from the control unit (4);
**characterized in that**:
- the electronic scale (1) further comprises:
* a voltage source (VS),
* at least a first switch (T1) connecting the voltage source (VS) to the load cell (2), which is controlled by the control unit (4), and the detection circuit (3),
* a first amplifier (A1) having two inputs connected to two terminals of the load cell (2) and an output connected to the logic circuit (CL),
* a second amplifier (A2) having two inputs connected to the two terminals of the load cell (2) and an output connected to the control unit (4),
* a second switch (T2) connecting the voltage source (VS) to the second amplifier (A2), the second switch (T2) being controlled by the control unit (4),
the first amplifier (A1) being separate from the second amplifier (A2), the second amplifier (A2) consuming more electrical power than the first amplifier (A1),
- the detection circuit (3) is further configured to:
* controlling (CT1a) the at least one first switch (T1) so as to connect the weight sensor (2) to the voltage source (VS) for a first predetermined duration (Δ t0),
- the control unit (4) is further configured to:
* controlling (CT1b) the at least one first switch (T1) so as to connect the weight sensor (2) to the voltage source (VS) for a second predetermined duration (Δ t1),
* controlling (CT2) the second switch (T2) so as to enable a weight measurement during the second duration (Δ t1), the second duration (Δ t1) being longer than the first duration (Δ t0).

2. An electronic scale (1; 1') comprising:
- a weight sensor (2),
- a control unit (4) connected to the weight sensor (2),
- a detection circuit (3) connected to the control unit (4) and to the weight sensor (2),
wherein:
- the detection circuit (3) is configured to periodically control (CT1a) a voltage supply (Vs) to the weight sensor (2) and to detect a weight increase exceeding a predetermined threshold and, when said weight increase is detected, to send a command (C_INT) to the control unit (4) to initiate a weight measurement, and
- the control unit (4) is configured to, upon receiving the trigger command (C_INT), exit a standby state and initiate a weight measurement on the scale by issuing a command to supply voltage to the weight sensor (CT1b) and by processing the voltage across the weight sensor (2),
the detection circuit (3) being separate from the control unit (4);
**characterized in that**:
- the electronic scale (1') further comprises:
* a voltage source (Vs),
* at least a first switch (T1) connecting the voltage source (Vs) to the load cell (2),
* an amplifier (A2) having two inputs connected to two terminals of the load cell (2) and an output, and
* at least one second switch (T2) connecting the voltage source (VS) to the amplifier (A2),
- the detection circuit (3) and the control unit (4) are connected to the at least one first switch (T1), the at least one second switch (T2), and the output of the amplifier (A2),
- the detection circuit (3) is further configured to:
* controlling (CT1a) the at least one first switch (T1) so as to connect the weight sensor (2) to the voltage source (VS) for a predetermined first duration (Δ t0),
* controlling (CT2a) the at least one second switch (T2) so as to enable detection of a weight increase during the first time period (Δ t0)
- the control unit (4) is further configured to:
* controlling (CT1b) the at least one first switch (T1) so as to connect the weight sensor (2) to the voltage source (VS) during a second predetermined time period (Δ t1),
* controlling (CT2b) the at least one second switch (T2) so as to enable a weight measurement during the second duration (Δ t1), the second duration (Δ t1) being greater than the first duration (Δ t0).

3. The electronic scale (1; 1') according to claim 1 or 2, wherein the electronic scale further comprises a display, the control unit (4) being further connected to the display and configured to transmit a signal representative of the weight measurement to the display.

4. The electronic scale (1; 1') according to any one of the preceding claims, wherein:
- the control unit (4) comprises a processor,
- the detection circuit (3) comprises a logic circuit (CL), preferably programmable, a clock, and a comparator (C1),
the logic circuit (CL) being configured to periodically control, at a predetermined time interval determined based on a clock signal emitted by the clock, the voltage supply to the weight sensor (CT1a),
the logic circuit (CL) being further connected to the comparator (C1) and configured to send a command (C_INT) to the control unit (4) to initiate a weight measurement when the comparator (C1) detects that the weight measurement exceeds the predetermined threshold.

5. The electronic scale (1; 1') according to any one of the preceding claims, wherein the control unit (4) comprises a microcontroller and the command to initiate a weight measurement is a microcontroller interrupt command (C_INT), the microcontroller (4) being configured to perform a weight measurement upon receipt of an interrupt command (C_INT).

6. The electronic scale (1; 1') according to any of the preceding claims, wherein the electronic scale (1; 1') is a personal scale and the weight sensor (2) comprises at least two strain gauges combined in at least one Wheatstone bridge circuit.

7. The electronic (1; 1') according to any one of the preceding claims, wherein the control unit (4) is further configured to send a detection frequency change command (C_CONFIG) to the detection circuit (3).

8. A method for controlling an electronic scale (1; 1') according to any one of the preceding claims, wherein the method comprises the following steps:
a. periodically supplying a voltage (CT1a) to the weight sensor (2) via the detection circuit (3) and detecting, via said detection circuit (3), a weight increase exceeding a predetermined threshold,
b. when a weight increase exceeding the predetermined threshold is detected, sending a trigger command (C_INT) to initiate a weight measurement to the control unit (4),
c. upon receipt of the trigger command (C_INT) by the control unit (4):
i. the control unit exits a standby state, and
ii. the control unit (4) performs a weight measurement on the scale, comprising:
1. sending a voltage supply command (CT1b) to the weight sensor, and
2. processing the voltage across the weight sensor.

9. The method for controlling an electronic scale according to the preceding claim, wherein the duration of the voltage supply command to the weight sensor issued by the detection circuit is shorter than the duration of the voltage supply command to the weight sensor issued by the control unit.

10. The method for controlling an electronic scale according to any one of claims 8 to 9, wherein the method further comprises the following steps:
- recording a usage history of the scale,
- determining at least two different time periods based on the usage history, a first time period corresponding to frequent use of the scale and a second time period corresponding to less frequent use of the scale,
- issuing a command (C_CONFIG) to change the detection frequency to the detection circuit at the start of each of the first and second time periods.

11. A computer program comprising instructions for implementing a portion of the method according to one of claims 8 through 10 by the control unit (4), following receipt of a command to initiate a weight measurement, comprising the steps of:
- causing the control unit to exit a standby state, and
- performing a weight measurement on the scale, comprising:
* issuing a command to supply power to the weight sensor, and
* processing the measurement taken by the weight sensor,
when this program is executed by a processor.

12. A non-volatile computer-readable storage medium on which a program according to claim 11 is stored, when said program is executed by a processor.
